# EUROPÄISCHE PATENTANMELDUNG

(11) **EP 4 389 841 A1**
(43) Veröffentlichungstag der Anmeldung: **26.06.2024**
(21) Anmeldenummer: 23217610.7
(22) Anmeldetag: 18.12.2023
(51) Int. Cl.: C09J 7/21, C09J 7/38

(54) **HAFTKLEBEELEMENT FÜR DIE KABELUMWICKELUNG**

(30) Priorität: 21.12.2022 DE 102022134352
(71) Anmelder: TESA SE, 22848 Norderstedt (DE)
(72) Erfinder: LUNDING, Marta, 22848 Norderstedt (DE); FINK, Mathias Patrick, 22848 Norderstedt (DE)
(74) Vertreter: tesa SE

(57) **Zusammenfassung**

Die Erfindung betrifft ein Haftklebeelement für den Einsatz bei der Umwickelung von mit Kunststoff isolierten Kabeln, umfassend: a) eine Trägerschicht, wobei die Trägerschicht ein textiles Flächengebilde umfasst, das ausgewählt ist aus der Gruppe bestehend aus Velours, Gelegen, Geweben und Vliesen, wobei das textile Flächengebilde ein oder mehrere Kunstfasern umfasst, b) eine auf der Trägerschicht angeordnete Klebeschicht, wobei die Klebeschicht eine Haftklebemasse umfasst, wobei die Haftklebemasse bezogen auf die Masse der Haftklebemasse umfasst: i) einen oder mehrere Dienkautschuke in einem kombinierten Massenanteil von 40 % oder mehr, und ii) ein oder mehrere Klebharze in einem kombinierten Massenanteil von 25 % oder mehr, wobei die Haftklebemasse als Klebharze ein oder mehrere Terpenphenolharze mit einer Hydroxylzahl von 80 mg KOH/g oder weniger umfasst, wobei der kombinierte Massenanteil der Terpenphenolharze 25 % oder mehr beträgt, bezogen auf die Gesamtmasse der Klebharze in der Haftklebemasse.

## Beschreibung

Die Erfindung betrifft ein Haftklebeelement für die Kabelumwicklung und ein entsprechendes Verfahren zum Umwickeln von Kabeln mit einem solchen Haftklebeelement. Offenbart wird zudem die Verwendung entsprechender Haftklebeelemente bei der Umwicklung von mit Kunststoff isolierten Kabeln und die Verwendung von spezifischen Terpenphenolharzen als Klebharz in einer Haftklebemasse zur Steigerung der Kabelverträglichkeit der Haftklebemasse.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar, deren Klebewirkung auf den eingesetzten Klebemassen beruht. Der Einsatz von Klebebändern ist mit vielen Vorteilen verbunden, die diese Technologie für den Einsatz in vielen Industriezweigen, beispielsweise in der Elektronik- oder Fahrzeugindustrie prädestinieren.

Für viele Anwendungen sind dabei insbesondere sogenannte Haftklebebänder relevant, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Eine besondere Bedeutung kommt Klebebändern im Allgemeinen und Haftklebebändern im Speziellen bei der Handhabung von elektrischen Kabeln zu. In vielen Industriebereichen, beispielsweise im Bereich der Fahrzeugindustrie, müssen elektrische Kabel gebündelt, verlegt und/oder befestigt werden. Haftklebebänder bieten dabei eine effiziente Möglichkeit, um elektrische Kabel zu befestigen oder durch Umwicklung mehrere Kabel zu größeren Kabelsträngen zusammenzufassen. Entsprechend werden Haftklebebänder für den Einsatz bei der Handhabung von elektrischen Kabeln regelmäßig als besonders vorteilhaft angesehen.

Trotz der Anwendungsvorteile typischer Haftklebebänder bei der Handhabung elektrischer Kabel treten in der Praxis auch Probleme auf, denen sich der Fachmann gegenübersieht. Elektrische Kabel sind regelmäßig mit einer elektrisch isolierenden Schutzschicht aus Kunststoff versehen, welche den stromdurchflossenen Leiter von der Außenwelt abschirmt und für den sicheren Betrieb elektrischer Kabel wesentlich ist. Die Klebeschicht von typischen Haftklebebändern umfasst zumeist eine komplexe Mischung an unterschiedlichen Substanzen, insbesondere filmbildende Polymere und Klebharze sowie Weichmacher und andere Additive. Wenn die Kunststoffisolierung elektrischer Kabel mit einem Haftklebeband umwickelt wird, kommt die Kunststoffisolierung mit dieser Klebemasse in Kontakt. Im Laufe der Zeit kann es, insbesondere bei erhöhten Einsatztemperaturen, zu einer physikalischen und/oder chemischen Wechselwirkung zwischen den Bestandteilen der Klebemasse und der Kunststoffisolierung kommen. Solche Wechselwirkungen können dazu führen, dass die strukturelle Integrität der Kunststoffisolierung mit der Zeit vermindert wird, wodurch die Gefahr von Beschädigungen erhöht wird, die beispielsweise zum Freilegen des elektrischen Leiters führen können, wodurch neben der Gefahr eines Kurzschlusses insbesondere auch Sicherheitsrisiken entstehen.

Das Ausmaß, in dem ein Haftklebeband einer beklebten Kunststoffisolierung mit der Zeit zusetzt, wird im Bereich der Technik auch als Kabelverträglichkeit bezeichnet. Die Kabelverträglichkeit von Haftklebebändern ist dabei eine wichtige Eigenschaft solcher Haftklebebänder, die bei der Handhabung elektrischer Leiter zum Einsatz kommen sollen, und spielt insbesondere in solchen Bereichen, in denen lange Produktlebenszeiten angestrebt werden, beispielsweise in der Fahrzeug- oder Bauindustrie, eine wichtige Rolle.

Entsprechend besteht im Bereich der Technik ein stetes Interesse daran, leistungsfähige Haftklebebänder zu entwickeln, welche eine vorteilhafte Kabelverträglichkeit aufweisen und bei der Anwendung in der Kabelumwicklung auch nach langen Einsatzzeiten keine beziehungsweise eine möglichst geringe Schädigung der Kunststoffisolation verursachen.

Hierbei muss in der Praxis insbesondere eine gute Kabelverträglichkeit zu Polyvinylchlorid (PVC) gewährleitet werden, da sich eine gute Kabelverträglichkeit auf PVC-ummantelten Leitungen in vielen Fällen als besondere Herausforderung zeigt.

In den letzten Jahren hat die Bedeutung einer vorteilhaften Kabelverträglichkeit dabei aber auch für andere Isoliermaterialien zugenommen. Dies ist auch dadurch bedingt, dass das zuvor häufig als Isolierungsmaterial eingesetzte Polyvinylchlorid (PVC) von den Kabelherstellern teilweise durch nachhaltigere und/oder umweltverträglichere Alternativen ersetzt wird, wobei neben Fluorpolymeren insbesondere auch Polyesterkunststoffe als Isoliermaterialien an Bedeutung gewonnen haben. Entsprechende Isoliermaterialien können jedoch bei der Wechselwirkung mit Klebemassen ein anderes Verhalten zeigen als Polyvinylchlorid, sodass bestehende Lösungen, die für PVC etabliert sind, für viele neue Kabeltypen nicht unbedingt eine zufriedenstellende Kabelverträglichkeit zeigen.

Im Stand der Technik finden sich zahlreiche Offenbarungen, welche sich mit Haftklebebändern und deren Einsatz zur Ummantelung von Kabeln und Kabelbäumen befassen, beispielsweise in der WO 02/14446 A1, der EP 0994169 A2, der DE 102008021739 A1, der DE 102007031224 A1 oder der EP 1270695 A2. Hierbei werden im Stand der Technik in vielen Fällen eher unpolare Klebharze wie beispielsweise hydrierte Kohlenwasserstoffharze oder aromatische Kohlenwasserstoffharze eingesetzt, um vorteilhafte Kabelverträglichkeiten zu erreichen, wie es beispielsweise in der DE102007031224A1 offenbart ist.

Auch wenn der Einsatz von gegebenenfalls hydrierten Kohlenwasserstoffharzen in einigen Fällen zu akzeptablen Kabelverträglichkeiten führen kann, wird diese Lösung im Gebiet der Technik hinsichtlich anderer Aspekte zuweilen auch als nachteilig empfunden. Nach Einschätzung der Erfinder lassen sich durch den Einsatz dieser eher unpolaren Harze nämlich für einige an sich anstrebenswerte Klebmassenzusammensetzungen keine ausreichenden Kabelverträglichkeiten erhalten, insbesondere nicht beim Einsatz mit Isolierungen aus PVC. Zudem werden die mit der aus dem Stand der Technik bekannten Lösung erreichbaren Klebkräfte in einigen Fällen als verbesserungsbedürftig angesehen. Zudem wird zumindest für mache Anwendungen die Einschränkung auf die Verwendung von unpolaren Harzen, insbesondere Kohlenwasserstoffharzen, als nachteilig angesehen, da hierdurch der Gestaltungsspielraum des Fachmannes bei der Einstellung der physikalisch-chemischen Eigenschaften der Klebemasse begrenzt wird.

Die primäre Aufgabe der vorliegenden Erfindung war es, die Nachteile des Standes der Technik zu beseitigen oder zumindest zu verringern.

Insbesondere war es eine Aufgabe der vorliegenden Erfindung, Haftklebeelemente für den Einsatz bei der Umwicklung von mit Kunststoff isolierten Kabeln anzugeben, welche über eine ausgezeichnete Kabelverträglichkeit verfügen und insbesondere für den Einsatz mit einer breiten Palette an Kabelisolierungen aus unterschiedlichen isolierenden Kunststoffen, vor allem aber mit PVC, geeignet sind.

Dabei war es eine Aufgabe der vorliegenden Erfindung, dass die anzugebenden Haftklebeelemente über ausgezeichnete klebtechnische Eigenschaften verfügen sollten, insbesondere über eine vorteilhafte Klebkraft.

Es war eine weitere Aufgabe der vorliegenden Erfindung, dass durch die anzugebenden Haftklebeelemente eine größere Flexibilität in der Zusammensetzungskonzeption von kabelverträglichen Klebmassen erreicht werden sollte und insbesondere auch auf den Einsatz von Kohlenwasserstoffharzen verzichtet werden können sollte.

Insoweit war es wünschenswert, dass die anzugebenden Haftklebeelemente möglichst weitgehend unter Einsatz solcher Ausgangsmaterialien und Herstellungsverfahren herstellbar sein sollten, die bereits heute im Gebiet der Technik zum Einsatz kommen.

Es war eine ergänzende Aufgabe der vorliegenden Erfindung, ein Verfahren zum Umwickeln von mit Kunststoff isolierten Kabeln anzugeben.

Es war eine sekundäre Aufgabe der vorliegenden Erfindung, eine Verwendung für die anzugebenden Haftklebeelemente bei der Umwicklung von mit Kunststoff isolierten Kabeln bereitzustellen und eine Verwendung von spezifischen Terpenphenolharzen in Haftklebemassen zur Steigerung der Kabelverträglichkeit anzugeben.

Die Erfinder der vorliegenden Erfindung haben nunmehr gefunden, dass sich die vorstehend beschriebenen Aufgaben überraschenderweise lösen lassen, wenn in Haftklebeelementen eine spezifische Ausgestaltung der Trägerschicht mit besonders konzipierten, Kautschuk basierten Haftklebemassen kombiniert wird, wenn in den eingesetzten Haftklebemassen als Klebharze Terpenphenolharze eingesetzt werden, die eine niedrige Hydroxylzahl aufweisen, wie es in den Ansprüchen definiert ist. Überraschenderweise können mit entsprechend ausgestalteten Haftklebeelementen für eine breite Palette an unterschiedlichen Kabelisolierungen, insbesondere jedoch auch für Isolierungen aus PVC, ausgezeichnete Kabelverträglichkeiten und vorteilhafte klebtechnische Eigenschaften erreicht werden. Hierbei war es besonders überraschend, dass entsprechende vorteilhafte Eigenschaften, insbesondere hinsichtlich der Kabelverträglichkeit, in diesen Systemen durch den Einsatz relativ polarer Harze erreicht werden können, wodurch für den Fachmann eine größere Flexibilität bei der Zusammensetzungskonzeption von kabelverträglichen Klebmassen eröffnet wird.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren und Verwendungen ergeben sich aus den Merkmalen bevorzugter Haftklebeelemente.

Insoweit nachfolgend für ein Element, beispielsweise für einen Mischungsbestandteil wie die Dienkautschuke oder die Terpenphenolharze, sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw. Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die Erfindung betrifft ein Haftklebeelement für den Einsatz bei der Umwickelung von mit Kunststoff isolierten Kabeln, umfassend:
a) eine Trägerschicht, wobei die Trägerschicht ein textiles Flächengebilde umfasst, das ausgewählt ist aus der Gruppe bestehend aus Velours, Gelegen, Geweben und Vliesen, wobei das textile Flächengebilde ein oder mehrere Kunstfasern umfasst,
b) eine auf der Trägerschicht angeordnete Klebeschicht, wobei die Klebeschicht eine Haftklebemasse umfasst, wobei die Haftklebemasse bezogen auf die Masse der Haftklebemasse umfasst:
   i) einen oder mehrere Dienkautschuke in einem kombinierten Massenanteil von 40 % oder mehr, und
   ii) ein oder mehrere Klebharze in einem kombinierten Massenanteil von 25 % oder mehr,
wobei die Haftklebemasse als Klebharze ein oder mehrere Terpenphenolharze mit einer Hydroxylzahl von 80 mg KOH/g oder weniger umfasst, wobei der kombinierte Massenanteil der Terpenphenolharze 25 % oder mehr, vorzugsweise 30 % oder mehr beträgt, bezogen auf die Gesamtmasse der Klebharze in der Haftklebemasse.

Die erfindungsgemäßen Haftklebeelemente sind für den Einsatz bei der Umwicklung von mit Kunststoffen isolierten Kabeln geeignet.

Der Ausdruck Haftklebeelemente bezeichnet im Rahmen der vorliegenden Erfindung solche Artikel, die gemeinhin auch als Selbstklebeartikel bezeichnet werden. Hierbei umfasst der Ausdruck Haftklebeelemente in Übereinstimmung mit dem fachmännischen Verständnis alle dünnen, flächigen Gebilde, d.h. Gebilde mit einer überwiegenden Ausdehnung in zwei Dimensionen, insbesondere Folien, Folienabschnitte und Etiketten, jedoch besonders bevorzugt Klebebänder mit ausgedehnter Länge und begrenzter Breite, wobei entsprechende Haftklebeelemente beispielsweise häufig in der Form von Rollen vertrieben werden. Bevorzugt ist entsprechend ein erfindungsgemäßes Haftklebeelement, wobei das Haftklebeelement ein Klebeband oder ein Klebeetikett ist.

Die erfindungsgemäßen Haftklebeelemente sind haftklebrig, was durch den Einsatz einer Haftklebemasse erreicht wird. Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G') und der Verlustmodul (G") herangezogen, die mittels dynamisch mechanischer Analyse (DMA), beispielsweise unter Verwendung eines Rheometers, ermittelt werden können. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10° bis 10¹ rad/sec G' und G" jeweils zumindest zum Teil im Bereich von 10³ bis 10⁷ Pa*s liegen.

Die erfindungsgemäßen Haftklebeelemente umfassen eine Trägerschicht sowie zumindest eine auf der Trägerschicht angeordnete Klebeschicht, welche die Haftklebemasse umfasst. Auch wenn es in der Theorie möglich ist, die erfindungsgemäßen Haftklebeelemente als doppelseitige Haftklebeelemente auszuführen, ist es mit Blick auf die gewünschte Anwendung in der Kabelumwicklung bevorzugt, die Haftklebeelemente als einseitige Haftklebeelemente auszuführen. Bevorzugt ist entsprechend ein erfindungsgemäßes Haftklebeelement, wobei das Haftklebeelement genau eine auf der Trägerschicht angeordnete Klebeschicht umfasst.

Als Trägerschicht fungiert in den erfindungsgemäßen Haftklebebändern ein textiles Flächengebilde, bei dem es sich um ein Velours, ein Gelege, ein Gewebe oder ein Vlies handelt. Mit entsprechenden Trägerschichten konnten in den Experimenten der Erfinder ausgezeichnete Ergebnisse erzielt werden, wobei entsprechende Trägerschichten insbesondere gegenüber dem Einsatz von Trägerschichten mit glatten Oberflächen, beispielsweise Kunststofffolien, bevorzugt sind. Hierbei erachten die Erfinder insbesondere den Einsatz von Geweben und Vliesen als besonders vorteilhaft. Ohne an diese Theorie gebunden sein zu wollen gehen die Erfinder davon aus, dass es die zumeist besonders strukturierte Oberflächenbeschaffenheit und die zumeist vorhandenen Poren sind, die zu vorteilhaften klebtechnischen Eigenschaften beitragen und in umwickelten Kabelsträngen resultieren, welche eine besonders vorteilhafte Haltbarkeit des Klebeverbundes aufweisen. Hierbei leisten die textilen Flächengebilde auch darüber hinaus einen Beitrag zu den vorteilhaften Eigenschaften erfindungsgemäßer Haftklebeelemente und gewährleisten insbesondere eine gute Anschmiegsamkeit bzw. eine geringe Biegesteifigkeit was für die Umwicklung von Kabelsträngen vorteilhaft ist. Gewebe, Velours und teilweise auch Vliese leisten dabei einen Beitrag zum Abriebschutz, wobei insbesondere Vliese und Velours auch einen vorteilhaften Einfluss auf die Geräuschdämpfung haben.

Ganz besonders bevorzugt ist hierbei der Einsatz eines Vlieses als textiles Flächengebilde, da solche Vliese regelmäßig über mechanische Eigenschaften verfügen, welche sie für den Einsatz in Trägerschichten von Klebeelementen prädestinieren. Bevorzugt ist entsprechend ein erfindungsgemäßes Haftklebeelement, wobei das textile Flächengebilde ausgewählt ist aus der Gruppe bestehend aus Geweben und Vliesen, bevorzugt ausgewählt ist aus der Gruppe bestehend aus Vliesen.

Auch wenn potenziell mehrlagige Trägerschichten denkbar sind, ist ein erfindungsgemäßes Haftklebeelement bevorzugt, wobei die Trägerschicht aus dem textilen Flächengebilde besteht.

Das erfindungsgemäß in der Trägerschicht einzusetzende textile Flächengebilde umfasst zumindest eine Art von Kunstfasern. In den Experimenten der Erfinder hat sich dieses Kriterium als wichtig erwiesen, um in Kombination mit den erfindungsgemäß einzusetzenden Haftklebemassen vorteilhafte klebtechnische Eigenschaften und eine ausgezeichnete Haltbarkeit des beim Umwickeln von Kabeln herstellbaren Verbundes zu erreichen, wobei insbesondere gegenüber baumwollbasierten Trägermaterialien hinsichtlich der Haltbarkeit dieser Verbünde Vorteile erreicht werden können. Die vorteilhafte Kunststoffverträglichkeit der erfindungsgemäß einzusetzenden Haftklebemassen, die sich in der guten Kabelverträglichkeit äußert, führt nach Einschätzung der Erfinder in vorteilhafter Weise auch dazu, dass der Einsatz kunstfaserbasierter Träger, insbesondere solcher aus Kunststofffasern, besonders effizient möglich ist und in diesem Fall auch bei langen Lebensdauern eine gute Verbundfestigkeit an der Grenzfläche zwischen Klebemasse und Träger erreicht wird, wobei durch den Einsatz von Kunstfasern für den umwickelten Kabelverbund Haltbarkeitsvorteile gegenüber anderen Fasern, beispielsweise Baumwolle, erreicht werden können.

Die Erfinder haben insoweit gefunden, dass zumindest prinzipiell auch gemischte Materialien als textile Flächengebilde eingesetzt werden können, die beispielsweise neben Kunstfasern auch Naturfasern umfassen. Nach Einschätzung der Erfinder ist es jedoch besonders bevorzugt, die textilen Flächengebilde möglichst weitgehend aus Kunstfasern auszubilden. Bevorzugt ist demgemäß ein erfindungsgemäßes Haftklebeelement, wobei das textile Flächengebilde zu einem Massenanteil von 90 % oder mehr, bevorzugt von 95 % oder mehr, besonders bevorzugt von 98 % oder mehr, ganz besonders bevorzugt im Wesentlichen vollständig, aus den Kunstfasern besteht, bezogen auf die Masse des textilen Flächengebildes.

Den Erfindern ist es insoweit gelungen, besonders vorteilhafte Kunstfasertypen zu identifizieren. Bevorzugt ist nämlich ein erfindungsgemäßes Haftklebeelement, wobei die eine oder die mehreren Kunstfasern ausgewählt sind aus der Gruppe bestehend aus Glasfasern und Kunststofffasern, bevorzugt ausgewählt sind aus der Gruppe bestehend aus Kunststofffasern, besonders bevorzugt ausgewählt sind aus der Gruppe bestehend aus Polyesterfasern, insbesondere Polyethylenterephthalat, und Polyolefinfasern, insbesondere Polypropylenfasern.

Mit Blick auf eine möglichst nachhaltige Produktion und eine Verringerung des Bedarfs an fossilen Ressourcen schlagen die Erfinder vor, dass es vorteilhaft ist, wenn die Kunstfasern zumindest teilweise und vorzugsweise im Wesentlichen vollständig aus recycelten Kunststoffen hergestellt werden, was im Rahmen der vorliegenden Erfindung vorteilhafterweise möglich ist. Bevorzugt ist hierfür ein erfindungsgemäßes Haftklebeelement, wobei die eine oder die mehreren Kunstfasern ausgewählt sind aus der Gruppe bestehend aus zumindest teilweise, bevorzugt im Wesentlichen vollständig, recycelten Kunstfasern.

Ein Bestandteil der erfindungsgemäßen Haftklebebänder, welcher für die Kabelverträglichkeit besonders maßgeblich ist, ist die Haftklebemasse, welche im späteren Einsatz mit der Kunststoffisolierung des Kabels in Kontakt treten wird und auch die Verbundfestigkeit und Haltbarkeit an der Grenzfläche zur Trägerschicht mitbestimmt.

Die vorstehend definierten Bestandteile der Haftklebemasse werden in Übereinstimmung mit dem fachmännischen Verständnis jeweils als "ein oder mehrere" eingesetzt. Die Bezeichnung "ein oder mehrere" bezieht sich dabei in branchenüblicher Weise auf die chemische Natur der entsprechenden Verbindungen und nicht auf deren Stoffmenge. Beispielsweise kann die Haftklebemasse als Dienkautschuk ausschließlich Styrol-Isopren-Styrol-Kautschuk umfassen, was bedeuten würde, dass die Haftklebemasse eine Vielzahl der entsprechenden Moleküle umfasst.

In branchenüblicher Weise werden dabei die Massenanteile als kombinierte Massenanteile der einen oder der mehreren Komponenten angegeben, wodurch ausgedrückt wird, dass der Massenanteil der entsprechend ausgebildeten Komponenten in der Haftklebemasse zusammengenommen die entsprechenden Kriterien erfüllt, wobei in Abwesenheit anderer Angaben jeweils die Masse der Haftklebemasse das Bezugssystem ist.

Analog zu einem häufig gewählten Vorgehen im Bereich der Technik werden etwaige in der Haftklebemasse enthaltende Füllstoffe, d.h. heterogen in der Haftklebemasse vorliegende, nichtlösliche Bestandteile, wie beispielsweise partikuläre Füllstoffe oder Fasern, im Rahmen der vorliegenden Erfindung nicht der Haftklebemasse zugerechnet, wie es auch nachfolgend weiter definiert wird. Als Bezugssystem für die Masse der Haftklebemasse fungieren entsprechend die Bestandteile der Haftklebemasse, die vom Fachmann zuweilen auch als "Basisformulierung" bezeichnet werden und welche neben den Dienkautschuken und den Klebharzen auch weitere Additive, beispielsweise Weichmacher umfassen.

Die erfindungsgemäß einzusetzende Haftklebemasse umfasst Dienkautschuke und Klebharze. Sowohl bei Dienkautschuken als auch bei Klebharzen handelt es sich grundsätzlich um polymere (bzw. im Fall von Klebharzen zuweilen auch um oligomere) Verbindungen, welche teilweise auch auf vergleichbare Gerüstbausteine zurückgreifen, beispielsweise auf Dien-Verbindungen. In der Praxis hat der Fachmann jedoch keinerlei Probleme, Dienkautschuke und Klebharze voneinander zu unterscheiden. Diese Verbindungen werden nicht nur kommerziell als Dienkautschuke oder Klebharze vertrieben und in den Fachkreisen auch klar als solche bezeichnet, sondern lassen sich vom Fachmann in der Praxis auch zwanglos anhand ihrer Eigenschaften unterscheiden. Ein typisches Kriterium für die Unterscheidung von Dienkautschuken und Klebharzen ist dabei regelmäßig die gewichtsmittlere Molmasse, die sich zwischen diesen Verbindungen erheblich unterscheidet. Bevorzugt ist bezüglich dieser gewichtsmittleren Molmasse ein erfindungsgemäßes Haftklebeelement, wobei der eine oder die mehreren Dienkautschuke eine gewichtsmittlere Molmasse Mw von 60.000 g/mol oder mehr, bevorzugt von 90.000 g/mol oder mehr, aufweisen, und/oder wobei das eine oder die mehreren Klebharze eine gewichtsmittlere Molmasse M_{w} von 10.000 g/mol oder weniger, bevorzugt von 5.000 g/mol oder weniger, besonders bevorzugt von 1.000 g/mol oder weniger, aufweisen.

Die Bestimmung der gewichtsmittleren Molmasse erfolgt dabei an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Ä, 8,0 mm * 50 mm (Angaben hier und im Folgenden in der Reihenfolge: Typ, Partikelgröße, Porosität, Innendurchmesser * Länge; 1 Ä = 10⁻¹⁰ m) verwendet. Zur Auftrennung wird eine Kombination der Säulen des Typs PSS-SDV, 5 µm, 10³ Ä sowie 10⁵ Ä und 10⁶ Ä mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung wird mittels des kommerziell verfügbaren ReadyCal-Kits Poly(styrene) high der Firma PSS Polymer Standard Service GmbH, Mainz, durchgeführt. Diese wird anhand der Mark-Houwink-Parameter K und alpha universell in Polymethylmethacrylat (PMMA) umgerechnet, so dass die Angabe der Daten in PMMA-Massenäquivalenten erfolgt.

Es kann als Vorteil der erfindungsgemäßen Haftklebeelemente angesehen werden, dass diese hinsichtlich der einzusetzenden Dienkautschuke relativ flexibel sind. Gleichzeitig ist es den Erfindern jedoch gelungen, besonders geeignete Dienkautschuke zu identifizieren, wobei nach Einschätzung der Erfinder insbesondere der Einsatz von Synthese-Kautschuken besonders bevorzugt ist. Bevorzugt ist insoweit ein erfindungsgemäßes Haftklebeelement, wobei der eine oder die mehreren Dienkautschuke ausgewählt sind aus der Gruppe bestehend aus Naturkautschuk und Synthesekautschuken, bevorzugt ausgewählt sind aus der Gruppe bestehend aus Synthesekautschuken, besonders bevorzugt ausgewählt sind aus der Gruppe bestehend aus Styrol-haltigen Blockcopolymeren, insbesondere bevorzugt Styrol-Isopren-Styrol-Blockcopolymer (SIS).

Ausgehend von umfassenden eigenen Experimenten ist es den Erfindern zudem gelungen, für den Massenanteil der Dienkautschuke in der Haftklebemasse besonders geeignete Bereiche zu identifizieren, wobei nach Einschätzung der Erfinder insbesondere Massenanteile in der Nähe von 50 % in besonders vorteilhaften Haftklebeelementen resultieren. Bevorzugt ist nämlich insbesondere ein erfindungsgemäßes Haftklebeelement, wobei der kombinierte Massenanteil des einen oder der mehreren Dienkautschuke 40 % oder mehr, bevorzugt 45 % oder mehr, besonders bevorzugt 50 % oder mehr beträgt, bezogen auf die Masse der Haftklebemasse. Bevorzugt ist zusätzlich oder alternativ ein erfindungsgemäßes Haftklebeelement, wobei der kombinierte Massenanteil des einen oder der mehreren Dienkautschuke 60 % oder weniger, bevorzugt 55 % oder weniger, bezogen auf die Masse der Haftklebemasse. Besonders bevorzugt ist ein erfindungsgemäßes Haftklebeelement, wobei der kombinierte Massenanteil des einen oder der mehreren Dienkautschuke im Bereich von 30 bis 60 %, bevorzugt im Bereich von 35 bis 55 %, besonders bevorzugt im Bereich von 40 bis 50 %, liegt, bezogen auf die Masse der Haftklebemasse.

Neben den Dienkautschuken umfasst die erfindungsgemäß einzusetzende Haftklebemasse auch zumindest ein Klebharz. Bevorzugt ist dabei ein erfindungsgemäßes Haftklebeelement, wobei der kombinierte Massenanteil des einen oder der mehreren Klebharze im Bereich von 25 bis 70 %, bevorzugt im Bereich von 30 bis 65 %, besonders bevorzugt im Bereich von 35 bis 60 %, liegt, bezogen auf die Masse der Haftklebemasse. Bevorzugt ist insoweit zusätzlich oder alternativ ein erfindungsgemäßes Haftklebeelement, wobei der Quotient aus der kombinierten Masse des einen oder der mehreren Dienkautschuke geteilt durch die kombinierte Masse des einen oder der mehreren Klebharze im Bereich von 0,7 bis 1,5, bevorzugt im Bereich von 0,8 bis 1,4, besonders bevorzugt im Bereich von 0,8 bis 1,2, liegt.

Wesentlich für die erfindungsgemäßen Haftklebeelemente ist nunmehr, dass bezogen auf die Gesamtmasse der eingesetzten Klebharze zumindest 25 % oder mehr, vorzugsweise 30 % dieser Klebharze als spezifische Terpenphenolharze ausgeführt werden. Terpenphenolharze sind dem Fachmann im Bereich der Klebtechnik dabei ausgehend von seinem allgemeinen Fachwissen bekannt und von verschiedenen Anbietern kommerziell erhältlich, beispielsweise von der Firma DRT unter dem Handelsnamen Dertophene. Wie es auch durch den Namen ausgedrückt wird, handelt es sich um Copolymerisate auf der Basis von Terpenen und Phenol.

Wie nachfolgend weiter ausgeführt lassen sich auch in der Kombination verschiedener weiterer Harze mit dem erfindungsgemäß einzusetzenden Terpenphenolharzen vorteilhafte erfindungsgemäße Haftklebeelemente erhalten, die insbesondere hinsichtlich ihrer physikalisch-chemischen Eigenschaften besonders gezielt an die jeweiligen Anwendungserfordernisse angepasst werden können. Nach Einschätzung der Erfinder ist es für die überwiegende Zahl der Ausführungsformen jedoch bevorzugt, wenn als Klebharze möglichst weitgehend auf die spezifischen Terpenphenolharze zurückgegriffen wird. Bevorzugt ist entsprechend ein erfindungsgemäßes Haftklebeelement, wobei der kombinierte Massenanteil des einen oder der mehreren Terpenphenolharze 50 % oder mehr, bevorzugt 70 % oder mehr, besonders bevorzugt 90 % oder mehr, ganz besonders bevorzugt im Wesentlichen 100 %, beträgt, bezogen auf die Gesamtmasse der Klebharze in der Haftklebemasse.

Im Lichte der vorstehenden Ausführungen zu den bevorzugten Gehalten an Klebharz und der Vorteilhaftigkeit eines weitgehenden Einsatzes der spezifischen Terpenphenolharze erachten die Erfinder entsprechend auch bestimmte Massenanteile für die Terpenphenolharze als bevorzugt, die sich aus den grundsätzlichen Massenanteilen der Klebharze ergeben. Bevorzugt ist demgemäß ein erfindungsgemäßes Haftklebeelement, wobei der kombinierte Massenanteil des einen oder der mehreren Terpenphenolharze 25 % oder mehr, bevorzugt 30 % oder mehr, besonders bevorzugt 35 % oder mehr beträgt, bezogen auf die Masse der Haftklebemasse. Bevorzugt ist zusätzlich oder alternativ auch ein erfindungsgemäßes Haftklebeelement, wobei der kombinierte Massenanteil des einen oder der mehreren Terpenphenolharze 70 % oder weniger, bevorzugt 65 % oder weniger, besonders bevorzugt 60 % oder weniger beträgt, bezogen auf die Masse der Haftklebemasse. Besonders bevorzugt ist folglich ein erfindungsgemäßes Haftklebeelement, wobei der kombinierte Massenanteil des einen oder der mehreren Terpenphenolharze im Bereich von 25 bis 70 %, bevorzugt im Bereich von 30 bis 65 %, besonders bevorzugt im Bereich von 35 bis 60 %, bezogen auf die Masse der Haftklebemasse.

Die spezifischen Terpenphenolharze weisen eine niedrige Hydroxylzahl auf, was nach Einschätzung der Erfinder für die Erreichung der vorteilhaften Effekte wesentlich ist. Bei der Hydroxylzahl, die zuweilen auch kurz als OH-Zahl bezeichnet wird, handelt es sich um eine Angabe zu der Menge an in einem Material vorhandenen Hydroxygruppen, welches dem Fachmann im Bereich der Technik umfassend vertraut ist, und insbesondere bei der Charakterisierung von Harzen regelmäßig zum Einsatz kommt. Die Einheit der Hydroxylzahl ist dabei mg KOH/g, d.h. die Hydroxylzahl hat die Einheit von Milligramm Kaliumhydroxid pro Gramm Substanz. In Übereinstimmung mit dem üblichen Vorgehen in der Praxis erfolgt die Bestimmung der Hydroxylzahl im Rahmen der vorliegenden Erfindung gemäß der DIN 53240-3:2016-03.

Nach Einschätzung der Erfinder ist es tendenziell vorteilhaft, Terpenphenolharze mit möglichst kleinen Hydroxylzahlen einzusetzen. Gleichzeitig sollte nach Einschätzung der Erfinder zum Erhalt besonders vorteilhafter Haftklebemassen der Gehalt an Hydroxygruppen im Klebharz auch nicht zu niedrig gewählt werden, sodass sich nach Einschätzung der Erfinder ein besonders vorteilhaftes Konzentrationsintervall um etwa 50 mg KOH/g herum ergibt. Bevorzugt ist zunächst ein erfindungsgemäßes Haftklebeelement, wobei das eine oder die mehreren Terpenphenolharze eine Hydroxylzahl von 70 mg KOH/g oder weniger, bevorzugt 60 mg KOH/g oder weniger, besonders bevorzugt 50 mg KOH/g oder weniger, aufweisen. Bevorzugt ist zusätzlich oder alternativ auch ein erfindungsgemäßes Haftklebeelement, wobei das eine oder die mehreren Terpenphenolharze eine Hydroxylzahl von 15 mg KOH/g oder mehr, bevorzugt 20 mg KOH/g oder mehr, aufweisen. Besonders bevorzugt ist vor diesem Hintergrund ein erfindungsgemäßes Haftklebeelement, wobei das eine oder die mehreren Terpenphenolharze eine Hydroxylzahl im Bereich von 15 bis 80 mg KOH/g, bevorzugt im Bereich von 20 bis 70 mg KOH/g, aufweisen.

Nach Einschätzung der Erfinder ist es bevorzugt, wenn die eingesetzten Terpenphenolharze möglichst säurefrei sind. Bevorzugt ist entsprechend ein erfindungsgemäßes Haftklebeelement, wobei das eine oder die mehreren Terpenphenolharze, bevorzugt sämtliche Klebharze in der Haftklebemasse, eine Säurezahl gemäß DIN EN 1241:1998-05 von 5 mg KOH/g oder weniger, bevorzugt 2 mg KOH/g oder weniger, besonders bevorzugt 1 mg KOH/g oder weniger, aufweisen.

Basierend auf den von den Erfindern durchgeführten Experimenten ist es den Erfindern gelungen, besonders geeignete Terpenphenolharze über die Erweichungstemperatur zu charakterisieren. Bevorzugt ist nämlich ein erfindungsgemäßes Haftklebeelement, wobei das eine oder die mehreren Terpenphenolharze eine Erweichungstemperatur bestimmt gemäß ASTM E 28-18 ("Ring-and-Ball") von 80 °C oder mehr, bevorzugt von 90 °C oder mehr, aufweisen, wobei beispielsweise auch Erweichungstemperaturen von 100 °C oder mehr geeignet sind.

Wie vorstehend erläutert, erachten es die Erfinder für die überwiegende Zahl der Ausführungsformen erfindungsgemäßer Haftklebeelemente als vorteilhaft, wenn diese als Klebharz möglichst weitgehend und vorzugsweise im Wesentlichen ausschließlich die spezifischen Terpenphenolharze umfassen. Gleichzeitig erlaubt ist es in vorteilhafter Weise auch möglich, die spezifischen Terpenphenolharze mit anderen Klebharzen zu kombinieren und dabei trotzdem vorteilhafte Kabelverträglichkeiten zu erreichen. Hierdurch wird die Bandbreite der zur Verfügung stehenden Klebmassenzusammensetzungen gesteigert und die Möglichkeiten zur Einstellung der physikalisch-chemischen Eigenschaften an die jeweiligen Anwendungserfordernisse verbessert. Bevorzugt ist somit ein erfindungsgemäßes Haftklebeelement, wobei die Haftklebemasse neben den Terpenphenolharzen ein oder mehrere weitere Klebharze umfasst, bevorzugt in einem kombinierten Massenanteil im Bereich von 1 bis 70 %, bevorzugt im Bereich von 2 bis 50 %, besonders bevorzugt im Bereich von 5 bis 30 %, bezogen auf die Gesamtmasse der Klebharze in der Haftklebemasse. Bevorzugt ist dabei ein erfindungsgemäßes Haftklebeelement, wobei das eine oder die mehreren weiteren Klebeharze ausgewählt sind aus der Gruppe bestehend aus Kohlenwasserstoffharzen, bevorzugt zumindest teilweise hydrierten Kohlenwasserstoffharzen. Bevorzugt ist dabei zusätzlich oder alternativ ein erfindungsgemäßes Haftklebeelement, wobei das eine oder die mehreren weiteren Klebharze eine Erweichungstemperatur bestimmt gemäß ASTM E 28-18 von 80 °C oder mehr, bevorzugt von 90 °C oder mehr, aufweisen.

Die Erfinder haben erkannt, dass es in der Kombination der spezifischen Terpenphenolharze mit anderen Klebharzen, insbesondere unpolaren Klebharzen, wie Kohlenwasserstoffharzen, besonders vorteilhaft ist, die Erweichungstemperaturen der kombinierten Harze aufeinander abzustimmen. Hierbei sehen die Erfinder insbesondere solche Ausgestaltungen als besonders vorteilhaft an, in denen eines der Harze, d.h. das Terpenphenolharz oder das weitere Klebharz, eine hohe und das jeweils andere eine vergleichsweise niedrige Erweichungstemperatur aufweist. Bevorzugt ist entsprechend ein erfindungsgemäßes Haftklebeelement, wobei das eine oder die mehreren Terpenphenolharze eine Erweichungstemperatur von 120 °C oder mehr aufweisen, und wobei das eine oder die mehreren weiteren Klebharze eine Erweichungstemperatur im Bereich von 80 bis 110 °C aufweisen, oder wobei das eine oder die mehreren Terpenphenolharze oder das eine oder die mehreren weiteren Klebharze eine Erweichungstemperatur im Bereich von 80 bis 110 °C aufweisen, und wobei das eine oder die mehreren weiteren Klebharze eine Erweichungstemperatur im Bereich von 120 °C oder mehr aufweisen.

Die entsprechende Kombination von Harzen mit unterschiedlichen Erweichungstemperaturen erweist sich dabei auch für die Kombination von den erfindungsgemäß einzusetzenden Terpenphenolharzen als vorteilhaft. Bevorzugt ist entsprechend ein erfindungsgemäßes Haftklebeelement, wobei zumindest eines der Terpenphenolharze mit einer Hydroxylzahl von 80 mg KOH/g oder weniger, bevorzugt 70 mg KOH/g oder weniger, eine Erweichungstemperatur von 120 °C oder mehr aufweist und wobei zumindest eines der Terpenphenolharze mit einer Hydroxylzahl von 80 mg KOH/g oder weniger, bevorzugt 70 mg KOH/g oder weniger, eine Erweichungstemperatur im Bereich von 80 bis 110 °C aufweist.

Eine besondere Variante der vorstehend offenbarten Kombination von Klebharzen ist es, die spezifischen Terpenphenolharze, welche in den Haftklebemassen erfindungsgemäße Haftklebeelemente eingesetzt werden müssen, mit anderen Terpenphenolharzen zu kombinieren, welche das Kriterium der Hydroxylzahl nicht erfüllen, sondern vielmehr eine höhere Hydroxylzahl aufweisen. Entsprechende Terpenphenolharze mit hoher Hydroxylzahl sind -für sich genommen- nach Einschätzung der Erfinder zumeist nicht geeignet, gute Kabelverträglichkeiten und ausreichende klebtechnische Eigenschaften zu realisieren. In Kombination mit den spezifischen Terpenphenolharzen ist es jedoch möglich, zumindest geringe Mengen entsprechender Terpenphenolharze mit hohen Hydroxylzahlen einzusetzen, wodurch die Flexibilität bei der Einstellung der physikalisch-chemischen Eigenschaften der Haftklebemassen in vorteilhafter Weise weiter gesteigert werden kann, ohne dass die angestrebte vorteilhafte Kabelverträglichkeit verloren geht. Bevorzugt ist entsprechend auch ein erfindungsgemäßes Haftklebeelement, wobei die Haftklebemasse neben den Terpenphenolharzen ein oder mehrere weitere Terpenphenolharze mit einer Hydroxylzahl von mehr als 80 mg KOH/g, insbesondere mehr als 90 mg KOH/g, weiter insbesondere mehr als 100 mg KOH/g, umfasst, wobei der kombinierte Massenanteil der weiteren Terpenphenolharze 25 % oder weniger, bevorzugt 15 % oder weniger, besonders bevorzugt 5 % oder weniger, beträgt, bezogen auf die Masse der Haftklebemasse.

Es kann als Vorteil der Haftklebemassen gesehen werden, dass diese hinsichtlich der Anwesenheit von weiteren typischen Komponenten von Haftklebemassen sehr flexibel sind, wodurch es in vorteilhafter Weise möglich wird, die physikalisch-chemischen Eigenschaften besonders gezielt an die jeweiligen Anforderungen der jeweiligen Anwendungen anzupassen. Beispielhaft ist ein erfindungsgemäßes Haftklebeelement, wobei die Haftklebemasse ein oder mehrere Weichmacher umfasst, bevorzugt in einem kombinierten Massenanteil von 10 % oder weniger, besonders bevorzugt von 5 % oder weniger, bezogen auf die Masse der Haftklebemasse. Beispielhaft ist zusätzlich oder alternativ ein erfindungsgemäßes Haftklebeelement, wobei die Haftklebemasse ein oder mehrere Additive umfasst, bevorzugt in einem kombinierten Massenanteil im Bereich von 0,1 bis 10 %, besonders bevorzugt im Bereich von 0,2 bis 5 %, wobei die Additive bevorzugt ausgewählt sind aus der Gruppe bestehend aus Alterungsschutzmitteln, UV-Schutzmitteln, Farbstoffen, Prozesshilfsmitteln, bezogen auf die Masse der Haftklebemasse.

Ein besonderer Fall der weiteren Komponenten, welche der Einstellung der Eigenschaften von Haftklebemassen dienen, sind unlösliche Füllstoffe, die der Haftklebemasse zugesetzt werden können, um eine gefüllte Haftklebemasse zu erhalten. Bei diesen handelt es sich beispielsweise um partikuläre Füllstoffe mit einem mittleren Partikeldurchmesser (D50) von 5 µm oder mehr, bevorzugt 10 µm oder mehr, besonders bevorzugt 20 µm oder mehr, die in der Haftklebemasse nicht löslich sind und in dieser entsprechend als Dispersion vorliegen oder um makroskopische Füllstoffe wie beispielsweise Fasern. Bevorzugt sind die unlöslichen Füllstoffe ausgewählt aus der Gruppe bestehend aus partikulären Füllstoffen. Besonders bevorzugt sind die unlöslichen Füllstoffe ausgewählt aus der Gruppe bestehend aus expandierbaren Polymerhohlkugeln, nicht expandierbaren Polymerhohlkugeln, Polymervollkugeln, Glashohlkugeln, Glasvollkugeln, keramische Hohlkugeln, keramischen Vollkugeln, Kohlenstoffvollkugeln und pulverförmigen anorganischen Verbindungen, beispielsweise Mineralien wie Kreide, d.h. Calciumcarbonat. In Frage kommen als unlösliche Füllstoffe beispielsweise jedoch auch Fasern, Gelege, Plättchen und Stäbchen aus in der Haftklebemasse unlöslichen Materialien. Diese unlöslichen Füllstoffe werden im Rahmen der vorliegenden Erfindung nicht der Haftklebemasse zugerechnet und werden entsprechend bei der Berechnung von Massenanteilen relativ zur Masse der Haftklebemasse nicht berücksichtigt. Im Rahmen der vorliegenden Erfindung wird vielmehr definiert, dass der Zusatz von unlöslichen Füllstoffen zu einer Haftklebemasse in einer gefüllten Haftklebemasse resultiert. In diesem Fall handelt es sich folglich um ein erfindungsgemäßes Haftklebeelement, wobei die Klebeschicht eine gefüllte Haftklebemasse umfasst, bestehend aus:
bb.1) der Haftklebemasse, und
bb.2) einem oder mehreren unlöslichen Füllstoffen, beispielsweise Kreide,
wobei der kombinierte Massenanteil der unlöslichen Füllstoffe bevorzugt im Bereich von 0,5 bis 60 %, besonders bevorzugt im Bereich von 1 bis 50 %, ganz besonders bevorzugt im Bereich von 5 bis 40 %, liegt, bezogen auf die Masse der gefüllten Haftklebemasse.

Bevorzugt ist hinsichtlich der Dimensionierung der Schichten ein erfindungsgemäßes Haftklebeelement, wobei die Trägerschicht eine mittlere Dicke im Bereich von 50 bis 3000 µm, bevorzugt im Bereich von 100 bis 1000 µm, aufweist, und/oder wobei die Klebeschicht eine mittlere Dicke im Bereich von 20 bis 300 µm, bevorzugt im Bereich von 30 bis 150 µm, aufweist.

Bevorzugt ist zusätzlich oder alternativ ein erfindungsgemäßes Haftklebeelement, wobei die Trägerschicht ein Flächengewicht im Bereich von 30 bis 400 g/m², bevorzugt im Bereich von 50 bis 200 g/m², aufweist, und/oder wobei die Klebeschicht ein Flächengewicht im Bereich von 20 bis 300 g/m², bevorzugt im Bereich von 30 bis 150 g/m², aufweist.

Die Erfindung betrifft auch Verfahren zum Umwickeln von Kabeln, umfassend die Verfahrensschritte:
x) Herstellen oder Bereitstellen eines erfindungsgemäßen Haftklebeelements,
y) Herstellen oder Bereitstellen eines mit Kunststoff isolierten Kabels, und
z) Umwickeln des isolierten Kabels mit dem Klebeelement zum Erhalt eines umwickelten Kabelverbundes.

Bevorzugt ist dabei ein erfindungsgemäßes Verfahren, wobei der Kunststoff des mit Kunststoff isolierten Kabels ausgewählt ist aus der Gruppe bestehend aus Polyolefinen und Polyestern, bevorzugt Polyestern. Bevorzugt ist dabei zusätzlich oder alternativ ein erfindungsgemäßes Verfahren, wobei der Kunststoff des mit Kunststoff isolierten Kabels ausgewählt ist aus der Gruppe bestehend aus Polyvinylchlorid (PVC), Polypropylen (PP), vernetztem Polyethylen (X-PE) und Ethylen-Tetrafluorethylen-Copolymer (ETFE), besonders bevorzugt ausgewählt ist aus der Gruppe bestehend aus Polypropylen (PP), vernetztem Polyethylen (X-PE) und Polyvinylchlorid (PVC), besonders bevorzugt Polyvinylchlorid (PVC).

Offenbart wird darüber hinaus die Verwendung eines erfindungsgemäßen Klebeelements bei der Umwickelung von mit Kunststoff isolierten Kabeln zur Steigerung der Beständigkeit des umwickelten Kabelverbunden im Vergleich mit herkömmlichen umwickelten Kabelverbunden. Dies bedeutet, dass durch die Verwendung der erfindungsgemäßen Klebeelemente eine bessere Haltbarkeit eines damit umwickelten Verbundes erreicht wird als dies bei der Verwendung von aus dem Stand der Technik bekannten Klebeelementen der Fall wäre.

Offenbart wird abschließend zudem die Verwendung eines oder mehrerer Terpenphenolharze mit einer Hydroxylzahl von 80 mg KOH/g oder weniger als Klebharz in einer Haftklebemasse zur Steigerung der Kabelverträglichkeit der Haftklebemasse, wobei die Haftklebemasse bezogen auf die Masse der Haftklebemasse einen oder mehrere Dienkautschuke in einem kombinierten Massenanteil von 30 % oder mehr umfasst, und wobei das eine oder die mehreren Terpenphenolharze in einem kombinierten Massenanteil von 30 % oder mehr eingesetzt werden, bezogen auf die Gesamtmasse der Klebharze in der Haftklebemasse.

Aufgrund der geschilderten positiven Eigenschaften lässt sich das Haftklebeelement hervorragend zum Isolieren und Wickeln von Drähten oder Kabeln verwenden.

Vorzugsweise wird das Haftklebeelement zum Ummanteln von langgestrecktem Gut wie insbesondere Kabelsätzen eingesetzt, wobei das Haftklebeelement in einer schraubenförmigen Bewegung um das langgestreckte Gut geführt wird. Es ergibt sich die Form einer Helix (auch Schraube, Schraubenlinie, zylindrische Spirale oder Wendel genannt; Helix ist eine Kurve, die sich mit konstanter Steigung um den Mantel eines Zylinders windet). In einer Variante wird das langgestreckte Gut in axialer Richtung von dem Haftklebeelement umhüllt. Die Umwicklung eines Kabelbaums mit dem beschriebenen Haftklebeelement erfolgt dabei nicht - wie üblich - schraubenlinienförmig, sondern derart, dass beim Umwickeln eine Längsachse des Haftklebeelements im Wesentlichen parallel zur Verlaufsrichtung des Kabelbaums ausgerichtet ist. Im Querschnitt gesehen liegt das Haftklebeelement dabei in Form einer archimedischen Spirale um den Kabelbaum. Diese Art der Wicklung wird auch "Einschlagen des Kabelbaums" genannt.

Ebenfalls vom erfinderischen Gedanken umfasst ist ein ummanteltes langgestrecktes Gut, wie insbesondere ein Kabelsatz, ummantelt mit einem erfindungsgemäßen Haftklebeelement, sowie ein Fahrzeug, enthaltend ein derartig ummanteltes langgestrecktes Gut.

Gemäß einer Ausführungsform der Erfindung handelt es sich bei dem langgestreckten Gut um einen Kabelstrang, der ein Bündel aus mehreren Kabeln wie 3 bis 1000 Kabeln, bevorzugt 10 bis 500 Kabeln, insbesondere zwischen 50 und 300 Kabeln umfasst.

Aufgrund der hervorragenden Eignung des Haftklebeelements kann es in einer Ummantelung Verwendung finden, die aus einer Eindeckung besteht, bei der zumindest in einem Kantenbereich der Eindeckung das Haftklebeelement vorhanden ist, das so auf der Eindeckung verklebt ist, dass sich das Haftklebeelement über eine der Längskanten der Eindeckung erstreckt, und zwar vorzugsweise in einem im Vergleich zur Breite der Eindeckung schmalen Kantenbereich.

Ein derartiges Produkt sowie optimierte Ausführungsformen desselben werden in der EP 1 312 097 A1 offenbart. In der EP 1 300 452 A2, der DE 102 29 527 A1 sowie der WO 2006/108871 A1 werden Weiterentwicklungen dargestellt, für die das erfindungsgemäße Haftklebeelement ebenfalls sehr gut geeignet ist. Ebenso kann das erfindungsgemäße Haftklebeelement in einem Verfahren Verwendung finden, wie es die EP 1 367 608 A2 offenbart.

Schließlich beschreiben die EP 1 315 781 A1 sowie die DE 103 29 994 A1 Ausführungsformen von Klebebändern, wie sie auch für das erfindungsgemäße Haftklebeelement möglich sind.

Um die richtige Anwendung des Haftklebeelements insbesondere an Kabelbäumen sicherzustellen, kann zumindest eine in Längsrichtung verlaufende Kennzeichnungslinie auf der Oberseite des Trägers vorhanden sein. Bevorzugt sind zwei Kennzeichnungslinien. Diese Kennzeichnungslinien unterscheiden sich optisch und/oder haptisch von der sie umgebenden Oberfläche.

Die Markierung ist auf den Träger aufgebracht, beispielsweise durch Drucken. Alternativ oder zusätzlich kann aber auch so vorgegangen werden, dass die Markierung in den ersten Träger eingearbeitet ist. So lässt sich die Markierung als gleichsam eingewebter Kettfaden realisieren. Die EP 3 245 265 A1 beschreibt die Verwendung einer derartigen Kennzeichnungslinie auf einem Klebeband.

Um ein besonders einfaches Arbeiten für den Anwender zu ermöglichen, sind Perforationen in dem Haftklebeelement vorhanden, die insbesondere rechtwinklig zur Laufrichtung des Klebebands ausgerichtet und/oder in regelmäßigen Abständen angeordnet sind.

Die Perforation dient dabei in erster Linie als Abreißhilfe zur Ablängung auf die vorgegebene Länge.

Nachfolgend werden die Erfindung und bevorzugte Ausführungsformen der Erfindung unter Bezugnahme auf Experimente weiter erläutert und beschrieben.

### A. Eingesetzte Substanzen

Die in den Experimenten eingesetzten Substanzen sind in Tabelle 1 aufgeführt.

**Tabelle 1 - Eingesetzte Substanzen**

| Abkürzung | Substanz | Handelsname | Hersteller |
|---|---|---|---|
| Dienkautschuk 1 | SIS-Blockcopolymer Styrolgehalt: 16 Gew.-% | Europrene SOL T190 | Versalis |
| | Diblock-Gehalt: 25 Gew.-% | | |
| Dienkautschuk 2 | Naturkautschuk | STR (Standard Thai Rubber) | |
| Dienkautschuk 3 | SIS-Blockcopolymer, Styrolgehalt: 30 Gew.-% | Kraton D1165 | Kraton Polymers |
| | Diblock-Gehalt: 20 Gew.-% | | |
| Klebharz 1 | Hydriertes Kohlenwasserstoffharz | Regalite R1100 | Synthomer |
| Klebharz 2 | Hydriertes Kohlenwasserstoffharz | Plastolyn R1140 | Synthomer |
| Klebharz 3 | Terpenphenolharz T(Erweichung): 95 °C | Dertophene T | DRT |
| | OH-Zahl: 30 bis 50 mg KOH/g | | |
| Klebharz 4 | Terpenphenolharz T(Erweichung): 135 °C | Dertophene T135 | DRT |
| | OH-Zahl: 50 mg KOH/g | | |
| Klebharz 5 | Terpenphenolharz T(Erweichung): 118 °C | Dertophene H150 | DRT |
| | OH-Zahl: 135 bis 150 mg KOH/g | | |
| Klebharz 6 | Kolophoniumharz (Pentaerythrit-Ester des Kolophoniums) | Hydrogral P | DRT |
| Weichmacher | Weißöl | Pionier 2070P | Hansen und Rosenthal KG |
| Alterungsschutzmittel (ASM) | Sterisch gehindertes Phenol | Irganox 1520L | BASF |
| Füllstoff | Calciumcarbonat | Kreide MS40 | Kreidewerke Dammann |

### B. Herstellung der Haftklebeelemente

Zur Herstellung der Haftklebeelemente aus den in Tabelle 1 angegeben Substanzen wurden zunächst die Haftklebemassen hergestellt. Hierfür wurden die jeweils eingesetzten Substanzen im entsprechenden Verhältnis in ein Glas gegeben. Dazu wurde ein Lösemittelgemisch aus Benzin und Toluol gegeben, wobei ein Feststoffgehalt von 20 bzw. 40 Gew.-% eingestellt wurde. Anschließend wurden die so angesetzten Systeme für mindestens 3 Tage auf einer Rollbank gelagert, um alle Substanzen homogen zu lösen oder zu vermengen. Die so hergestellte Beschichtungsmasse wurden anschließend mit Hilfe eines Streichtisches je einmal auf eine 36 µm geätzte PET-Folie (für Klebkraftmessung) und einmal auf eine 36 µm PET-Transferfolie (für Kabelverträglichkeitstests) beschichtet, sodass im getrockneten Zustand jeweils ein Flächengewicht von 45 g/m² erreicht wird. Diese Muster wurden anschließend in einem Ofen bei 120 °C für 15 Minuten getrocknet. Im Anschluss wurden die auf dem Transferliner getrockneten Klebmassen mit Hilfe eines Laminiergerätes auf jeweils einen textilen Träger vom Typ PET-Maliwatt-Vlies mit einem Flächengewicht von 72 g/m² aufgetragen. Die entsprechende Herstellung der Klebeschichten aus Lösung eignet sich besonders gut für eine schnelle Probenherstellung im Labormaßstab, so dass sie im Rahmen der vorliegenden Erfindung zum Einsatz kommt.

Alternativ ist jedoch beispielsweise eine Beschichtung aus der Schmelze möglich, wobei bei diesem Vorgehen nach Einschätzung der Erfinder häufig Klebeschichten erhalten werden, die gegenüber dem lösungsmittelbasierten Verfahren sogar leicht verbesserte Eigenschaften zeigen, was jedoch für den vorliegend relevanten relativen Vergleich unbeachtlich ist. Für eine solche Beschichtung aus der Schmelze, d.h. im sogenannten Hotmelt-Prozess, werden die eingesetzten Substanzen beispielsweise im entsprechenden Verhältnis in einen Doppelschnecken- oder Planetwalzen-Extruder dosiert und bei erhöhter Temperatur compoundiert, so dass eine homogene Klebmasse entsteht. Das Ausformen der entsprechenden Klebeschicht des angestrebten Flächengewichts kann dann beispielsweise an einer Beschichtungsanlage mit Düsenbeschichtung erfolgen.

### C. Hergestellte Proben

Die Zusammensetzung der Haftklebemassen der hergestellten Klebebänder ist in den Tabellen 2, 3 und 4 zusammengefasst.

**Tabelle 2 - Zusammensetzung der Proben in Massenanteilen - Teil I**

| Substanz | E1 | E2 | E3 | E4 | E5 | E6 | E7 |
|---|---|---|---|---|---|---|---|
| Dienkautschuk 1 | 49,8 | 49,8 | 49,8 | 34,8 | 19,9 | 49,8 | 49,8 |
| Dienkautschuk 2 | - | - | - | - | 29,9 | - | - |
| Klebharz 1 | - | - | - | - | - | 24,9 | - |
| Klebharz 2 | - | - | - | - | - | - | - |
| Klebharz 3 | 49,7 | - | - | - | - | - | 36,2 |
| Klebharz 4 | - | 46,2 | 49,7 | 34,7 | 49,7 | 24,8 | - |
| Klebharz 5 | - | - | - | - | - | - | 10,0 |
| Klebharz 6 | - | - | - | - | - | - | - |
| Weichmacher | - | 3,5 | - | - | - | - | 3,5 |
| ASM | 0,5 | 0,5 | 0,5 | 0,5 | 0,5 | 0,5 | 0,5 |
| Füllstoff | - | - | - | 30 | - | - | - |

**Tabelle 3 - Zusammensetzung der Proben in Massenanteilen - Teil II**

| Substanz | E8 | V1 | V2 | V3 | V4 | V5 | V6 |
|---|---|---|---|---|---|---|---|
| Dienkautschuk 1 | 34,8 | 49,8 | 49,8 | 49,8 | 49,8 | 49,8 | 49,8 |
| Dienkautschuk 2 | - | - | - | - | - | - | - |
| Klebharz 1 | - | - | 46,2 | - | 23,1 | - | 24,9 |
| Klebharz 2 | - | - | - | - | - | - | - |
| Klebharz 3 | 7,0 | - | - | - | - | - | - |
| Klebharz 4 | 27,7 | - | - | - | - | - | - |
| Klebharz 5 | - | - | - | 46,2 | 23,1 | 49,7 | 24,8 |
| Klebharz 6 | - | 49,7 | - | - | - | - | - |
| Weichmacher | - | - | 3,5 | 3,5 | 3,5 | - | - |
| ASM | 0,5 | 0,5 | 0,5 | 0,5 | 0,5 | 0,5 | 0,5 |
| Füllstoff | 30 | - | - | - | - | - | - |

**Tabelle 3 - Zusammensetzung der Proben in Massenanteilen - Teil III**

| Substanz | E9 | E10 | E11 | E12 | E13 |
|---|---|---|---|---|---|
| Dienkautschuk 1 | - | - | 17,8 | 20,0 | 21,8 |
| Dienkautschuk 2 | - | - | 26,7 | 30,0 | 32,7 |
| Dienkautschuk 3 | 56,5 | 60,0 | - | - | - |
| Klebharz 1 | - | - | - | - | - |
| Klebharz 2 | - | - | - | - | - |
| Klebharz 3 | 8,7 | 8,0 | 11,1 | 10,0 | 9,1 |
| Klebharz 4 | 34,8 | 32,0 | 44,4 | 40,0 | 36,4 |
| Klebharz 5 | - | - | - | - | - |
| Klebharz 6 | - | - | - | - | - |
| Weichmacher | - | - | - | - | - |
| ASM | - | - | - | - | - |
| Füllstoff | - | - | - | - | - |

Es sei nochmals betont, dass die in der Tabelle aufgeführten, unlöslichen Füllstoffe im Rahmen der vorliegenden Erfindung nicht der Haftklebemasse zugerechnet und entsprechend bei der Berechnung von Massenanteilen relativ zur Masse der Haftklebemasse nicht berücksichtigt werden.

### D. Durchgeführte Versuche:

An den wie vorstehend beschrieben hergestellten Proben wurden die folgenden Tests durchgeführt.

### Klebkraft:

Die Klebkräfte wurden analog AFERA 5001 bei 23 °C und 50 % relativer Luftfeuchte bei einer Abzugsgeschwindigkeit von 300 mm/min und einem Abzugswinkel von 180° bestimmt. Als Substrat wurden Stahlplatten entsprechend der Norm verwendet. Die Verklebung des Messstreifens wurde dabei mittels einer Anrollmaschine mit 4 kg bei einer Temperatur von 23 °C vorgenommen. Die Klebebänder wurden sofort nach der Applikation abgezogen. Der Messwert (in N/cm) ergab sich als Mittelwert aus drei Einzelmessungen.

### Kabelverträglichkeit nach VW 60360-3: 2019-05:

Bei der verwendeten Testmethode VW 60360-3: 2019-05 handelt es sich um eine etablierte Automobilprüfungsrichtlinie, bei der die Kabelverträglichkeit in einem Langzeittest über 3000 h bewertet wird. Die Testmethode orientiert sich an der LV 312, die beispielsweise auch in der DE 102007031224 A1 umfassend beschrieben ist. Das Grundprinzip basiert darauf, dass das jeweilige Klebeband gemäß der VW 60360-3: 2019-05 um Kabel mit unterschiedlichen Isolierungen gewickelt und bei vorgegebenen Temperaturen (bspw. 105 °C bzw. 125 °C) gelagert wird. Alle 500 h wird eines der umwickelten Kabel kontrolliert, das Klebeband wieder abgewickelt und das Kabel um einen Dorn von 10 mm sowie 2 mm Durchmesser gewickelt. Es wird untersucht, ob die Isolierung dabei geschädigt wird. Für die vorstehend beschriebenen Proben wird nachfolgend das Ergebnis des Tests gemäß der VW 60360-3: 2019-05 bei einer Temperatur von 105 °C auf PVC-Isolierungen sowie bei 125 °C auf PP-, X-PE- und ETFE-Isolierungen gezeigt.

Das untersuchte mit PVC isolierte Kabel ist von Coficab (Bezeichnung: FLRY-A).

Das untersuchte mit X-PE isolierte Kabel ist von Draka (Bezeichnung: FLR21X-A hffr).

Das untersuchte mit PP isolierte Kabel ist von Coroplast (Bezeichnung: 8-8099).

Das untersuchte mit ETFE isolierte Kabel ist von Gebauer & Griller (Bezeichnung: ETFE A72).

Die Ergebnisse sind in der nachfolgenden Tabelle 4 zusammengefasst.

**Tabelle 4 - Ergebnisse der durchgeführten Versuche (B = Bestanden; NB = Nicht Bestanden; NM = Nicht Messbar; NG = Nicht Gemessen)**

| Probe | Klebkraft / (N/cm) | Kabelverträglichkeit gemäß VW 60360-3: 2019-05 | | | |
|---|---|---|---|---|---|
| | | PVC / 105°C | PP / 125 °C | X-PE / 125 °C | ETFE / 125 °C |
| E1 | 9,8 | B | B | B | B |
| E2 | 10,5 | B | B | B | B |
| E3 | 10,2 | B | B | B | B |
| E4 | 7,0 | B | B | B | B |
| E5 | 10,0 | B | B | B | B |
| E6 | 10,2 | B | B | B | B |
| E7 | 3,4 | B | B | B | B |
| E8 | 14,3 | B | B | B | B |
| E9 | 4,0 | B | B | B | B |
| E10 | 6,8 | B | B | B | B |
| E11 | 9,7 | B | B | B | B |
| E12 | 7,0 | B | B | B | B |
| E13 | 5,2 | B | B | B | B |
| V1 | 8,7 | NB | NG | NG | NG |
| V2 | 7,7 | NB | NB | B | B |
| V3 | NM | NM | NM | NM | NM |
| V4 | NM | NM | NM | NM | NM |
| V5 | NM | NM | NM | NM | NM |
| V6 | NM | NM | NM | NM | NM |

Die in Tabelle 4 zusammengefassten Ergebnisse zeigen, dass erfindungsgemäße Haftklebeelemente vorteilhafte Klebkräfte und ausgezeichnete Kabelverträglichkeiten aufweisen. Sämtliche erfindungsgemäßen Haftklebeelemente bestehen den etablierten Test gemäß VW 60360-3: 2019-05.

Die mit dem Einsatz der spezifischen Terpenphenolharze verbundenen Vorteile zeigen sich dabei beispielsweise besonders deutlich im Vergleich der Probe V2 mit der Probe E2, bei dem durch den Austausch eines unpolaren hydrierten Kohlenwasserstoffharzes, wie sie im Stand der Technik häufig eingesetzt werden, durch die spezifischen Terpenphenolharze mit niedriger OH-Zahl überraschenderweise vorteilhafte Kabelverträglichkeiten erreicht werden können, wobei darüber hinaus auch die Klebkraft verbessert wird. Die vorteilhafte Kabelverträglichkeit zeigt sich dabei für eine breite Palette an relevanten Isolierungsmaterialien, insbesondere aber für PVC. Auch der Vergleich der Proben V1 mit E1 und E3 verdeutlich die Verbesserung der Kabelverträglichkeit bei gleichzeitiger Steigerung der Klebkraft, die mit erfindungsgemäßen Klebeelementen erreicht werden kann.

Die Vergleichsproben V3 bis V6 zeigen keine messbare Klebkraft und verdeutlichen den Vorteil der erfindungsgemäß einzusetzenden Terpenphenolharze in den Systemen der vorliegenden Erfindung, insbesondere auch im Unterschied zu Terpenphenolharzen mit höheren Hydroxylzahlen.

Über die vorstehenden Experimente hinaus wurden die Klebemassen E1, E2, E4, E6, E9 und E11 analog zu dem vorstehend beschriebenen Vorgehen zudem auf einen Träger aus Gewebe (Flächengewicht 130 g/cm²) aufgebracht und hinsichtlich der Kabelverträglichkeit bewertet. Sämtliche der so hergestellten Muster bestanden den Kabelverträglichkeitstest auf den gemäß Tabelle 4 genannten Kabeltypen bei den entsprechenden Prüftemperaturen.

## Patentansprüche

1. Haftklebeelement für den Einsatz bei der Umwickelung von mit Kunststoff isolierten Kabeln, umfassend:
a) eine Trägerschicht, wobei die Trägerschicht ein textiles Flächengebilde umfasst, das ausgewählt ist aus der Gruppe bestehend aus Velours, Gelegen, Geweben und Vliesen, wobei das textile Flächengebilde ein oder mehrere Kunstfasern umfasst,
b) eine auf der Trägerschicht angeordnete Klebeschicht, wobei die Klebeschicht eine Haftklebemasse umfasst, wobei die Haftklebemasse bezogen auf die Masse der Haftklebemasse umfasst:
i) einen oder mehrere Dienkautschuke in einem kombinierten Massenanteil von 40 % oder mehr, und
ii) ein oder mehrere Klebharze in einem kombinierten Massenanteil von 25 % oder mehr,
wobei die Haftklebemasse als Klebharze ein oder mehrere Terpenphenolharze mit einer Hydroxylzahl von 80 mg KOH/g oder weniger umfasst, wobei der kombinierte Massenanteil der Terpenphenolharze 25 % oder mehr, vorzugsweise 30 % oder mehr beträgt, bezogen auf die Gesamtmasse der Klebharze in der Haftklebemasse.

2. Haftklebeelement nach Anspruch 1, wobei das textile Flächengebilde ausgewählt ist aus der Gruppe bestehend aus Geweben und Vliesen.

3. Haftklebeelement nach einem der Ansprüche 1 oder 2, wobei das textile Flächengebilde zu einem Massenanteil von 90 % oder mehr aus den Kunstfasern besteht.

4. Haftklebeelement nach einem der Ansprüche 1 bis 3, wobei der kombinierte Massenanteil des einen oder der mehreren Dienkautschuke im Bereich von 40 bis 60 % liegt, bezogen auf die Masse der Haftklebemasse.

5. Haftklebeelement nach einem der Ansprüche 1 bis 4, wobei der eine oder die mehreren Dienkautschuke ausgewählt sind aus der Gruppe bestehend aus Synthesekautschuken.

6. Haftklebeelement nach einem der Ansprüche 1 bis 5, wobei der kombinierte Massenanteil des einen oder der mehreren Terpenphenolharze 50 % oder mehr beträgt, bezogen auf die Masse der Haftklebemasse,

7. Haftklebeelement nach einem der Ansprüche 1 bis 6, wobei das eine oder die mehreren Terpenphenolharze eine Hydroxylzahl von 70 mg KOH/g oder weniger aufweisen.

8. Haftklebeelement nach einem der Ansprüche 1 bis 7, wobei das eine oder die mehreren Terpenphenolharze eine Erweichungstemperatur bestimmt gemäß ASTM E 28-18 von 80 °C oder mehr aufweisen.

9. Haftklebeelement nach einem der Ansprüche 1 bis 8, wobei die Haftklebemasse neben den Terpenphenolharzen ein oder mehrere weitere Terpenphenolharze mit einer Hydroxylzahl von mehr als 80 mg KOH/g, wobei der kombinierte Massenanteil der weiteren Terpenphenolharze 25 % oder weniger beträgt, bezogen auf die Masse der Haftklebemasse.

10. Verfahren zum Umwickeln von Kabeln, umfassend die Verfahrensschritte:
x) Herstellen oder Bereitstellen eines Haftklebeelements nach einem der Ansprüche 1 bis 9,
y) Herstellen oder Bereitstellen eines mit Kunststoff isolierten Kabels, und
z) Umwickeln des isolierten Kabels mit dem Klebeelement zum Erhalt eines umwickelten Kabelverbundes.
